# EUROPEAN PATENT SPECIFICATION

(11) **EP 0 677 823 B1**
(45) Date of publication and mention of the grant of the patent: **24.05.2000**
(21) Application number: 95103347.1
(22) Date of filing: 08.03.1995
(51) Int. Cl.: G06T 5/40

(54) **Image analyzing apparatus**
Vorrichtung zur Bildanalyse
Appareil pour l'analyse d'images

(30) Priority: 15.04.1994 JP 7752494
(43) Date of publication of application: 18.10.1995
(73) Proprietor: Fuji Photo Film Co., Ltd., Kanagawa-ken (JP)
(72) Inventor: Kaneko, Takashi, c/o Fuji Photo Film Co. Ltd., Ashigara-Kami-Gun, Kanagawa-Ken (JP); Some, Masato, c/o Fuji Photo Film Co. Ltd., Ashigara-Kami-Gun, Kanagawa-Ken (JP); Shibata, Hiromi, c/o Fuji Photo Film Co. Ltd., Ashigara-Kami-Gun, Kanagawa-Ken (JP)
(74) Representative: Klunker . Schmitt-Nilson . Hirsch

(56) References cited:
- EP-A- 0 527 524
- WO-A-90/06557
- WO-A-93/24899
- US-A- 4 811 090

## Description

### BACKGROUND OF THE INVENTION

The present invention relates to an image analyzing apparatus according to the pre-characterizing part of claim 1, particularly, to such an apparatus which can produce a density profile of an image area in a gray-level image in a desired manner, display it and analyze the image.

### DESCRIPTION OF THE PRIOR ART

Various image analyzing methods are known. These include an autoradiographic process comprising the steps of introducing a radioactively labeled substance into an organism, using the organism or a part of the tissue of the organism as a specimen, placing the specimen and a radiographic film such as a high sensitivity type X-ray film together in layers for a certain period of time to expose the radiographic film thereto and obtaining locational information regarding the radioactively labeled substance in the specimen from the resolved pattern of the radiographic film, a chemiluminescent process comprising the steps of selectively labeling a fixed high molecular substance such as a protein or a nucleic acid sequence with a labeling substance which generates chemiluminescent emission when it contacts a chemiluminescent substance, contacting the high molecular substance selectively labeled with the labeling substance and the chemiluminescent substance, detecting the chemiluminescent emission in the wavelength of visible light generated by the contact of the chemiluminescent substance and the labeling substance and obtaining information relating to the high molecular substance such as genetic information a detecting method using an electron microscope comprising the steps of irradiating a metal or nonmetal specimen with an electron beam, detecting a diffraction image, transmission image or the like and effecting elemental analysis, composition analysis of the specimen, structural analysis of the specimen or the like, or irradiating the tissue of an organism with an electron beam and detecting an image of the tissue of the organism, and a radiographic diffraction image detecting process comprising the steps of irradiating a specimen with radiation, detecting a radiographic diffraction image and effecting structural analysis of the specimen or the like.

Conventionally, these methods are carried out by employing a photographic film as a detecting material, recording a radiographic image, a chemiluminescent image, an electron microscopic image, a radiographic diffraction image or the like on the photographic film and observing a visual image with the eyes. However, in the case where a photographic film is employed as a detecting material, since a radiographic film has low sensitivity, there is a problem that it takes considerable time for recording an image in the autoradiographic process and the radiographic diffraction image detecting process. Further, in the chemiluminescent process, although it is necessary to employ a highly sensitive film having a high gamma value for detecting very weak chemiluminescent emission, when the highly sensitive film having a high gamma value is employed, it is difficult to expose the film reliably using a straight portion of the characteristic curve. Therefore, the film is often exposed improperly and it is necessary to repeatedly expose the films under various exposure conditions. Moreover, in the detecting process using the electron microscope, since the straight portion of the characteristic curve of a photographic film for an electron microscope is short, it is difficult to determine the proper exposure condition and it is necessary to repeatedly expose the films. Furthermore, in either processes, it is indispensable to chemically develop the films and, therefore, the operations are unavoidably complicated.

In view of the above, there have been proposed an autoradiographic process, a chemiluminescent process, a detecting process using an electron microscope and a radiographic diffraction image detecting process comprising the steps of employing, as a detecting material for the radiation, the visible light, the electron beam or the like, not a photographic film, but a stimulable phosphor which can absorb and store the energy of radiation, visible light, an electron beam or the like upon being irradiated therewith and release a stimulated emission whose amount is proportional to that of the received radiation, the visible light, the electron beam or the like upon being stimulated with an electromagnetic wave having a specific wavelength range, photoelectrically detecting the stimulated emission released from the stimulable phosphor, converting the detection signal to a digital signal, effecting a predetermined image processing on the obtained image data and reproducing an image on displaying means such as a CRT or the like or a photographic film (See for example, Japanese Patent Publication No. 1-60784, Japanese Patent Publication No. 1-60782, Japanese Patent Publication No. 4-3952, U.S. Patent No. 5,028,793, UK Patent Application 2,246,197 A, Japanese Patent Application Laid Open No. 61-51738, Japanese Patent Application Laid Open No. 61-93538, Japanese Patent Application Laid Open No. 59-15843 and the like).

According to the detecting processes using the stimulable phosphor, development, which is a chemical processing, becomes unnecessary. In addition, the exposure time can be markedly shortened in the autoradiographic process and the radiographic diffraction image detecting process. Improper exposure becomes rare and the exposing operation becomes easy in the chemiluminescent process and the detecting process using the electron microscope. Further, since the image is reproduced after the detected signal has been converted to a digital signal, the image can be reproduced in a desired manner by effecting signal processing on image data and it is also possible to effect quantitative analysis using a computer. Use of a stimulable phosphor in these process is therefore advantageous.

For effecting quantitative analysis, it may be necessary to produce a density profile of a specific image area in a gray-level image obtained by these processes and display it on displaying means such as a CRT.

For instance, it is necessary for determining the sequence of bases in DNA by electrophoresis to drop a plurality of specimens containing DNA fragments containing specific gene onto a gel support medium at regular intervals, separate and distribute each specimen by means of electrophoresis, denature each DNA by alkali processing to form single-stranded DNA, fix each DNA on a filter by means of the known Southern blotting method, hybridize each DNA with labeled DNA or RNA which is complementary to the DNA containing the specific gene, label each DNA fragment, and produce an image of the labeling substance, thereby determining the sequence of bases in each DNA. At this time, since the DNA having a smaller molecular weight moves a longer distance, the image corresponding to each specimen has a lane-like distribution and, therefore, images obtained by the electrophoresis include a plurality of lane-like images which are located parallel to each other at regular intervals. In the case where the sequence of bases in DNA is determined, a density profile of the lane-like image area in the thus produced image is often produced.

Further, in the thin layer chromatography widely used in the field of research into drug metabolism, for analyzing how a drug labeled with a labeling substance and introduced into a test animal has been changed in the body of the animal, specimens of urine, blood, tissue or the like gathered every predetermined time interval from a specific region of the animal are processed in a predetermined manner and dropped at predetermined positions at regular intervals on a TLC plate which is formed by coating powders of silica gel on a glass plate. The TLC plate is dipped in a solvent for distribution and the specimens are chromatgraphically distributed, thereby forming separate spots of respective components in the specimens. As a result, since the specimens gathered every predetermined time interval are one-dimensionally, namely, lane-like distributed, the obtained images include a plurality of lane-like images which are located parallel to each other at regular intervals. In this case, a density profile of the lane-like image area in the thus produced image is often produced for finding how the drug is metabolized.

Further, in the case where a diffraction image or transmission image of a metal or nonmetal specimen is produced by a electron microscope for analyzing the structure of the specimen or an electron microscopic image of tissue of an organism is produced for viewing the tissue of the organism, it is often the practice to specify a specific image area in the image and produce a density profile.

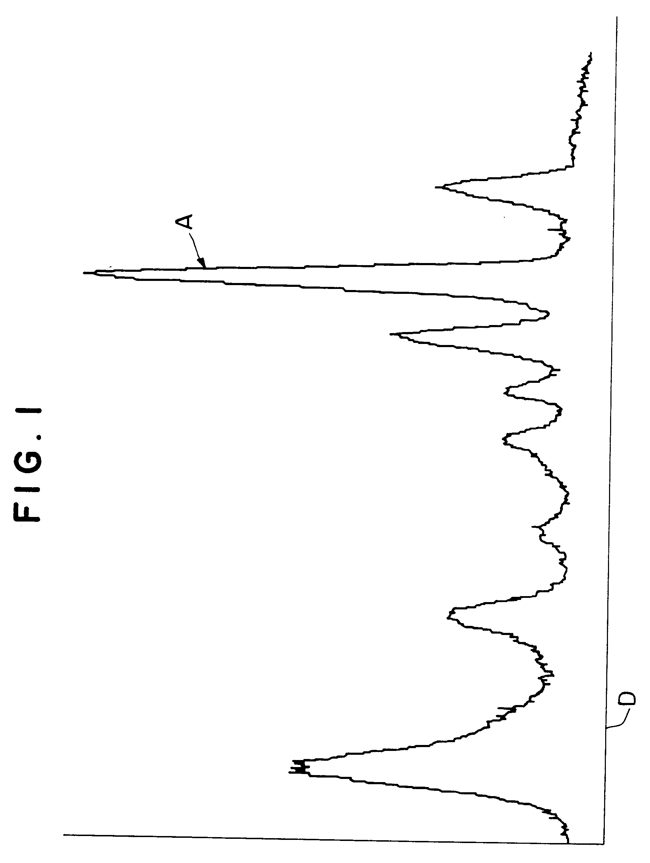

However, since the image of a protein produced by the thin layer chromatography (TLC) or the image produced for obtaining locational information regarding a gene often contains smear components, if a specific image area is specified and a density profile of the image area is produced, only a density profile influenced by the smear components is produced. Figure 1 shows the density profile A of an image of a protein produced in this manner by the thin layer chromatography (TLC) and displayed on a CRT. As shown in Figure 1, in the thus produced density profile A, the density of points whose density would be zero if the smear components were not present are represented by positive values.

Therefore, when a density profile of a specific image area is produced for quantitatively analyzing imaged locational information regarding a radioactive labeling substance in a specimen or the like, it is necessary to correct the density profile A of the image and produce a density profile of the image free from the smear components.

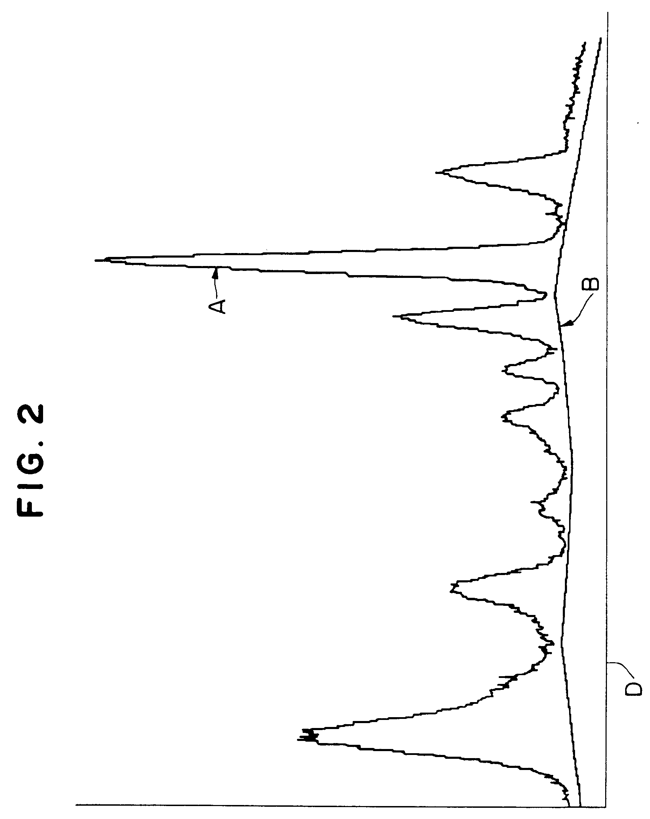

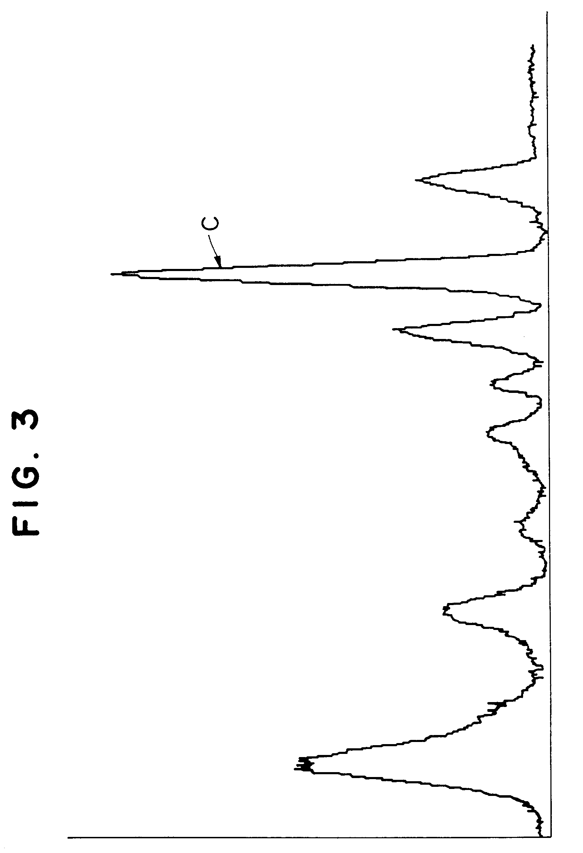

In view of the above, in one conventional method, a corrected density profile data of an image is produced by producing correcting curve data formed by data corresponding to density which can be considered to be the density of smear components in a data memory and subtracting it from the density profile data of the image, namely, by correcting the density profile data so that a correcting curve becomes a new base line, and a corrected density profile curve of the image is displayed on the CRT. Figure 2 is a view shown on a CRT of the operation for correcting the profile data effected in the data memory and B shows a correcting curve corresponding to the correcting curve data. Figure 3 is a CRT view of a corrected density profile of an image.

However, when the image density profile is corrected in this manner, it is impossible to know how the correction was effected. Even if improper correction was effected, there is nevertheless no choice but to accept the corrected image density profile data is correct. As a result, the analyzing accuracy is unavoidably lowered.

Moreover, where it is necessary to further correct an image density profile which was once corrected, since it is impossible to know how the correction was effected, it is impossible to correct the density profile in a desired manner, thereby lowering the analyzing accuracy.

The same problems occur in the case where, after an autoradiographic image, a chemiluminescent image, an electron microscopic image, a radiographic diffraction image or the like was recorded on a photographic film, the recorded image is photoelectrically read and converted to a digital signal and the thus obtained image signal is signal processed in a desired manner, thereby reproducing a visible image on displaying means such as a CRT or the like or a photographic film.

In accordance with the preamble of claim 1, WO-A-90 06557 discloses an image analysing apparatus for analysing tomographic data used for calculating a histogram. The histogram data are used for displaying a density profile on a screen. Since the base line of the density profile is adversely affected by background noise, correcting curve data values are subtracted from the histogram data. The correcting curve data are determined by obtaining the value of the leading edge of the first peak of the data profile and the value of the trailing edge of the peak curve. So as to obtain a corrected density profile on the displaying screen, difference values are obtained by subtracting at each point of the horizontal axis of the histogram the ordinate of said connecting line from the corresponding value of the density profile. Then, the corrected density profile is displayed without displaying the correcting values.

It is therefore an object of the present invention to provide an image analyzing apparatus which can produce an image density profile free from smear components in a desired manner.

In accordance with claim 1, the above and other objects of the present invention can be accomplished by an image analyzing apparatus comprising image data storing means for storing image data, image data memory means for two-dimensionally mapping and temporarily storing at least a part of the image data stored in the image data storing means and being adapted for forming an image based on the image data temporarily stored in the image data memory means on displaying means and producing a density profile of a predetermined image area, thereby quantitatively analyzing the image, the image analyzing apparatus further comprising profile data producing means for producing density profile data of a predetermined image area and storing them in the image data memory means, profile data correcting means for subtracting correcting curve data formed by data corresponding to density of smear components from the density profile data produced by the profile producing means and stored in the image data memory means, thereby correcting the density profile data, profile data storing means for storing the density profile data produced by the profile data producing means and the correcting curve data and profile displaying means adapted for displaying a density profile on the displaying means based on the density profile data produced by the profile data producing means and the density profile data corrected by the profile correcting means and displaying a correction processed curve formed by inverting a correcting curve obtained based on the correcting curve data with respect to a base line where density is zero on the displaying means.

In a preferred aspect of the present invention, an image analyzing apparatus further comprises temporary memory means for two-dimensionally mapping and temporarily storing the image data stored in the image data storing means, graphic data storing means for storing graphic data to be displayed on the displaying means and data synthesizing means for selecting at least a part of the image data stored in the temporary memory means and graphic data from among the graphic data stored in the graphic data storing means, synthesizing them, thereby producing synthesized data, and the image data memory means is adapted to two-dimensionally map and temporarily store at least a part of the synthesized data produced by the data synthesizing means.

In a further preferred aspect of the present invention, an image analyzing apparatus further comprises image data selecting means for selecting a part of the image data stored in the temporary memory means, image data enlarging/reducing means for enlarging or reducing the image data selected by the image data selecting means and storing them, enlarged/reduced image data storing means for storing the image data enlarged or reduced by the image data enlarging/reducing means, synthesized data storing means for two-dimensionally mapping and temporarily storing the synthesized data produced by the data synthesizing means and data area selecting means for selecting an area of the synthesized data stored in the synthesized data storing means and storing them in the image data memory means, and the data synthesizing means is adapted to synthesize the image data stored in the enlarged/reduced image data storing means and the graphic data stored in the graphic data storing means, thereby producing the synthesized data.

In a still further preferred aspect of the present invention, the data synthesizing means is adapted to select graphic data from among the graphic data stored in the graphic data storing means and determine the position of the graphic data in the synthesized data storing means.

In a yet further preferred aspect of the present invention, the image data is produced using a stimulable phosphor sheet.

In a further preferred aspect of the present invention, the image data are constituted by image data selected from a group consisting of autoradiographic image data, radiographic diffraction image data, electron microscopic image data and chemiluminescent image data.

In a still further preferred aspect of the present invention, the autoradiographic image data, the radiographic diffraction image data and the electron microscopic image data are produced by absorbing and storing the energy of a radiation or an electron beam emitted from a specimen in a stimulable phosphor, irradiating the stimulable phosphor with an electromagnetic wave and photoelectrically converting light emitted from the stimulable phosphor.

In a further preferred aspect of the present invention, the chemiluminescent image data are produced by absorbing and storing the energy of a visible light emitted from a specimen in a stimulable phosphor, irradiating the stimulable phosphor with an electromagnetic wave and photoelectrically converting light emitted from the stimulable phosphor.

In the present invention, the stimulable phosphor employed for producing an autoradiographic image, a radiographic diffraction image and an electron microscopic image may be of any type insofar as it can store radiation energy or electron beam energy and can be stimulated by an electromagnetic wave to release the radiation energy or electron beam energy stored therein in the form of light. However, a stimulable phosphor which can be stimulated by light having a visible light wavelength is preferably employed. More specifically, preferably employed stimulable phosphors include alkaline earth metal fluorohalide phosphors (Ba₁₋ₓ,M²⁺ₓ)FX:yA (where M²⁺ is at least one alkaline earth metal selected from the group consisting of Mg, Ca, Sr, Zn and Cd; X is at least one halogen selected from the group consisting of Cl, Br and I, A is at least one element selected from the group consisting of Eu, Tb, Ce, Tm, Dy, Pr, He, Nd, Yb and Er; x is equal to or greater than 0 and equal to or less than 0.6 and y is equal to or greater than 0 and equal to or less than 0.2.) disclosed in U.S. Patent No. 4,239,968, alkaline earth metal fluorohalide phosphors SrFX:Z (where X is at least one halogen selected from the group consisting of Cl, Br and I; and Z is at least one of Eu and Ce.) disclosed in Japanese Patent Application Laid Open No. 2-276997, europium activated complex halide phosphors BaFX·xNaX':aEu²⁺ (where each of X or X' is at least one halogen selected from the group consisting of Cl, Br and I; x is greater than 0 and equal to or less than 2; and y is greater than 0 and equal to or less than 0.2.) disclosed in Japanese Patent Application Laid Open No. 58-56479, cerium activated trivalent metal oxyhalide phosphors MOX:xCe (where M is at least one trivalent metal selected from the group consisting of Pr, Nd, Pm, Sm, Eu, Tb, Dy, Ho, Er, Tm, Yb and Bi; X is at least one halogen selected from the group consisting of Br and I; and x is greater than 0 and less than 0.1.) disclosed in Japanese Patent Application Laid Open No. 58-69281, cerium activated rare earth oxyhalide phosphors LnOX:xCe (where Ln is at least one rare earth element selected from the group consisting of Y, La, Gd and Lu; X is at least one halogen selected from the group consisting of Cl, Br, and I; and x is greater than 0 and equal to or less than 0.1.) disclosed in U.S. Patent No. 4,539,137 and europium activated complex halide phosphors M^{II}FX·aM^{I}X'·bM'^{II}X''₂·cM^{III}X'''₃·xA:yEu²⁺ (where M^{II} is at least one alkaline earth metal selected from the group consisting of Ba, Sr and Ca; M^{I} is at least one alkaline metal selected from the group consisting of Li, Na, K, Rb and Cs; M'^{II} is at least one divalent metal selected from the group consisting of Be and Mg; M^{III} is at least one trivalent metal selected from the group consisting of Al, Ga, In and Tl; A is at least one metal oxide; X is at least one halogen selected from the group consisting of Cl, Br and I; each of X', X'' and X''' is at least one halogen selected from the group consisting of F, Cl, Br and I; a is equal to or greater than 0 and equal to or less than 2; b is equal to or greater than 0 and equal to or less than 10⁻²; c is equal to or greater than 0 and equal to or less than 10⁻²; a+b+c is equal to or greater than 10⁻²; x is greater than 0 and equal to or less than 0.5; and y is greater than 0 and equal to or less than 0.2.) disclosed in U.S. Patent No. 4,962,047.

In the present invention, the stimulable phosphor employed for producing a chemiluminescent image may be of any type insofar as it can store the energy of light having a visible light wavelength and can be stimulated by an elec tromagnetic wave to release the energy of light having a visible light wavelength stored therein in the form of light. However, a stimulable phosphor which can be stimulated by light having a visible light wavelength is preferably employed. More specifically, preferably employed stimulable phosphors include metal halophosphates, rare-earth-activated phosphors, aluminate-host phosphors, silicate-host phosphors and fluoride-host phosphors disclosed in UK Patent Application 2,246,197 A.

The above and other objects and features of the present invention will become apparent from the following description made with reference to the accompanying drawings.

### BRIEF DESCRIPTION OF THE DRAWINGS

Figure 1 is a graph showing the density profile of an image of a protein produced by thin layer chromatography (TLC).
Figure 2 is a view showing an image displayed on a CRT when the density profile is corrected.
Figure 3 is a graph showing a density profile corrected by a conventional method and displayed on a CRT.
Figure 4 is a schematic perspective view showing an image reading apparatus for producing image data to be analyzed by an image analyzing apparatus which is an embodiment of the present invention.
Figure 5 is a block diagram of an autoradiographic image analyzing apparatus and an image reading apparatus.
Figure 6 is a block diagram of signal processing means.
Figures 7 and 8 are flow charts showing an operation of an autoradiographic image analyzing apparatus for producing a density profile of a predetermined image area in an autoradiographic image displayed on a CRT and for correcting it.
Figure 9 is a partially enlarged view showing the screen of a CRT displaying an image area surrounded by a rectangular pattern.
Figure 10 is a graph showing a density profile corrected and displayed on a CRT.

### DESCRIPTION OF THE PREFERRED EMBODIMENTS

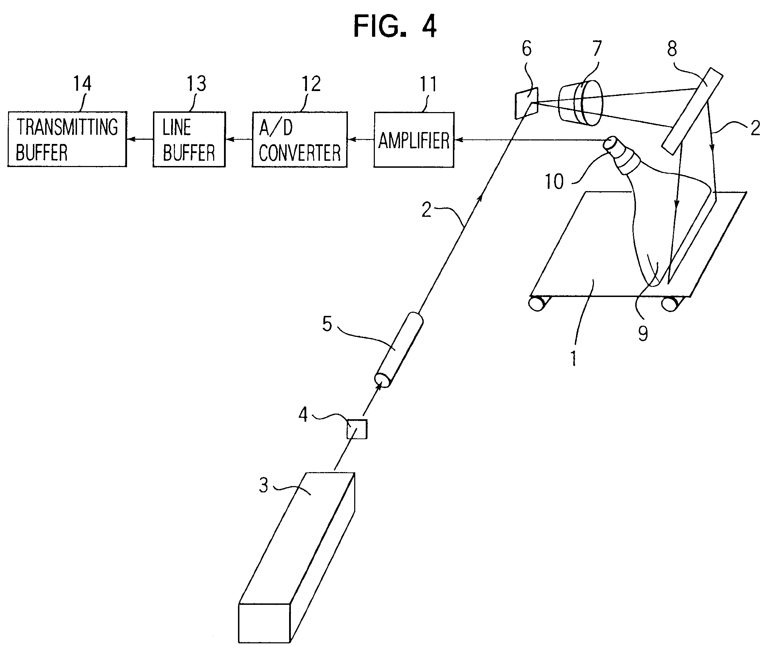

A stimulable phosphor sheet 1 shown in Figure 4 stores locational information regarding radioactive labeling material contained in a specimen (not shown) in the form of radioactive energy. Locational information as termed here includes a variety of information relating to the location of radioactive labeled substances, or aggregations thereof, present in a specimen, such as the location, the shape, the concentration, the distribution or combinations thereof.

In this embodiment, the image of a protein produced by thin layer chromatography (TLC) is stored in the stimulable phosphor sheet 1.

The stimulable phosphor sheet which stores the locational information regarding a radioactive material in the specimen is scanned with a laser beam 2 and stimulated, thereby being caused to emit stimulated emission.

The laser beam 2 is generated by a laser beam source 3 and passes through a filter 4 to cut off light in the wavelength region corresponding to the wavelength region of stimulated emission to be emitted from the stimulable phosphor sheet 1 in response to stimulation by the laser beam 2. The beam diameter of the laser beam 2 is accurately adjusted by a beam expander 5 and the laser beam 2 enters a beam deflector 6 such as a galvanometer. The laser beam 2 deflected by the beam deflector 6 passes through an fθ lens 7 and is reflected by a plane reflecting mirror 8, thereby impinging upon the stimulable phosphor sheet 1. The fθ lens 7 ensures that the stimulable phosphor sheet 1 is always scanned with the laser beam 2 at a uniform beam speed.

The stimulable phosphor sheet 1 is conveyed in the direction along the arrow in Figure 4 in synchronism with the above mentioned scanning with the laser beam 2 so that the whole surface of the stimulable phosphor sheet 1 is scanned by the laser beam 2.

When irradiated with the laser beam 2, the stimulable phosphor sheet 1 releases stimulated emission in an amount proportional to the radiation energy stored therein and the stimulated emission enters a light guiding sheet 9.

The light receiving end of the light guiding sheet 9 has a linear shape and is positioned in the vicinity of the stimulable phosphor sheet 1 so as to face the scanning line on the stimulable phosphor sheet 1. The exit end of the light guiding sheet 9 is in the form of a ring and is connected to the light receiving surface of a light detector 10 such as a photomultiplier for photoelectrically detecting light. This light guiding sheet 9 is made by processing a transparent thermoplastic resin sheet such as an acrylic synthetic resin and so constituted that the emission introduced from the light receiving end is transmitted to the exit end under repeated total reflection within the light guiding sheet 9 and received by the light receiving surface of the light detector 10 via the exit end.

Therefore, the stimulated emission produced by the stimulable phosphor sheet 1 upon being irradiated with the laser beam 2 enters into the light guiding sheet 9 and is received by the light detector 10 via the exit end under repeated total reflection within the sheet 9.

On the light receiving surface of the light detector 10 is provided a filter which allows only light of the wavelength region of the stimulated emission released from the stimulable phosphor sheet 1 to pass through and cuts off light of the wavelength region of the laser beam so that the light detector 10 can photoelectrically detect only the stimulated emission released from the stimulable phosphor sheet 1.

The stimulated emission photoelectrically detected by the light detector 10 is converted to an electrical signal, amplified by an amplifier 11 having a predetermined amplifying factor so as to produce an electrical signal of a predetermined level and then input to an A/D converter 12. The electrical signal is converted to a digital signal with a scale factor suitable for the signal fluctuation width and input to a line buffer 13. The line buffer 13 temporarily stores image data corresponding to one scanning line. When the image data corresponding to one scanning line have been stored in the line buffer 13 in the above described manner, the line buffer 13 outputs the data to a transmitting buffer 14 whose capacity is greater than that of the line buffer 13 and when the transmitting buffer 14 has stored a predetermined amount of the image data, it outputs the image data to an autoradiographic image analyzing apparatus.

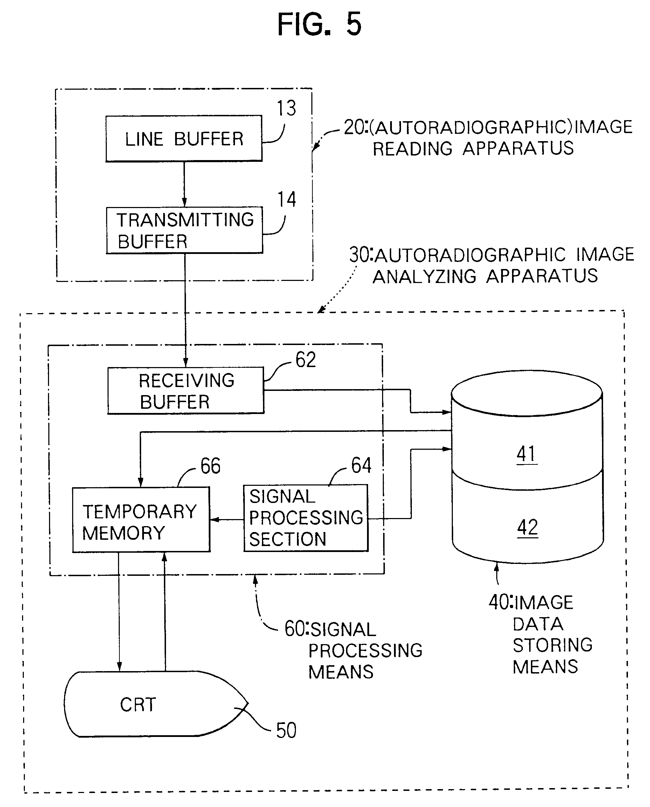

Figure 5 is a block diagram of the autoradiographic image analyzing apparatus and an image reading apparatus.

As shown in Figure 5, the autoradiographic image analyzing apparatus 30 includes signal processing means 60 for receiving image data containing locational information regarding radioactive labeling material contained in a specimen, which were stored and recorded in the stimulable phosphor sheet 1, read out by the image reading apparatus 20 and converted to a digital signal, and processing them so as to reproduce a visible image which has desirable density, tone, contrast and the like, and has excellent observation and analysis property, image data storing means 40 for storing image data which were input to the signal processing means 60 from the image reading apparatus 20 and processed thereby, and a CRT 50 for reproducing an image based on the image data containing locational information regarding radioactive labeling material contained in a specimen.

The image data temporarily stored in the transmitting buffer 14 of the image reading apparatus 20 are input to a receiving buffer 62 in the signal processing means 60 of the autoradiographic image analyzing apparatus 30 and temporarily stored therein. When a predetermined amount of the image data have been stored, the stored image data are output to an image data temporary storing section 41 in the image data storing means 40 and stored therein. In this manner, the image data fed from the transmitting buffer 14 of the image reading apparatus 20 to the receiving buffer 62 of the signal processing means 60 and temporarily stored therein are fed from the transmitting buffer 14 to the image data temporary storing section 41 in the image data storing means 40. When the image data obtained by scanning the whole surface of the stimulable phosphor sheet 1 with the laser beam 2 have been stored in the image data temporary storing section 41 in the image data storing means 40, the signal processing section 64 in the signal processing means 60 reads the image data from the image data temporary storing section 41 and stores them in a temporary memory 66 in the signal processing means 60. After the image data were subjected to necessary signal processing in the signal processing section 64, the signal processing section 64 stores only the signal-processed image data in a image data storing section 42 in the image data storing means 40. The signal processing section 64 then erases the image data stored in the image data temporary storing section 41.

The image data stored in the image data storing section 42 in the image data storing means 40 can be read by the signal processing section 64 and displayed on the CRT 50 so that an operator can view and analyze the image.

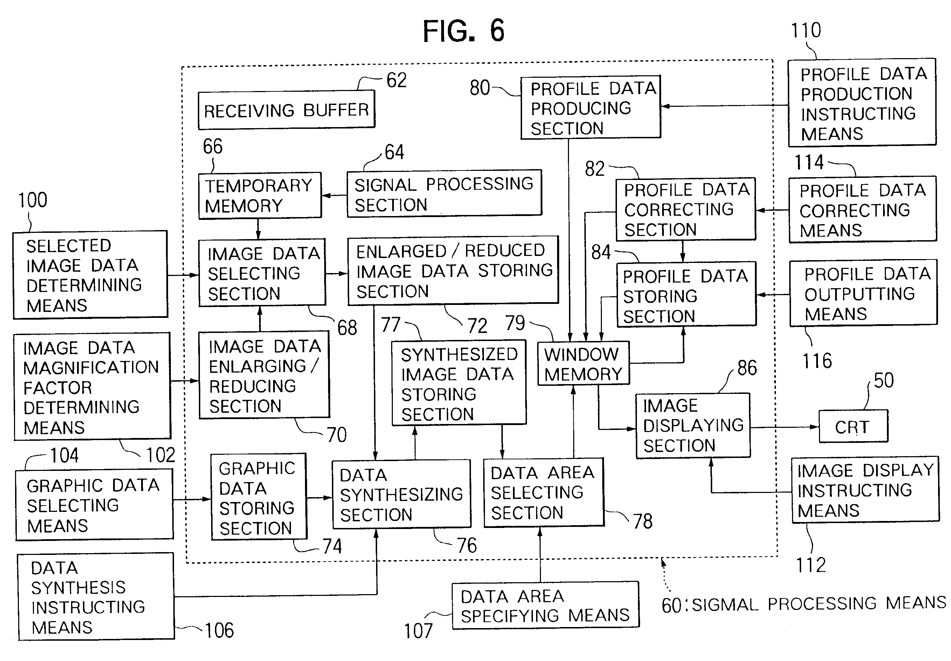

Figure 6 is a block diagram of the signal processing means 60. As shown in Figure 6, the signal processing means 60 includes the receiving buffer 62 for receiving image data from the transmitting buffer 14 in the image reading apparatus 20, the signal processing section 64 for effecting signal processing and the temporary memory 66 for temporarily storing the image data. The temporary memory 66 is constituted so as to two-dimensionally map image data and temporarily store them.

The signal processing means 60 further includes an image data selecting section 68 for selecting a part of image data from among the image data temporarily stored in the temporary memory 66, an image data enlarging/reducing section 70 for enlarging or reducing the image data selected by the image data selecting section 68, an enlarged/reduced image data storing section 72 for two-dimensionally mapping and temporarily storing the image data enlarged or reduced by the image data enlarging/reducing section 70, a graphic data storing section 74 for storing various graphic data to be displayed on the CRT 50, a data synthesizing section 76 for synthesizing the image data temporarily stored in the image data enlarging/reducing section 70 and the graphic data stored in the graphic data storing section 74 and to be displayed on the CRT 50, a synthesized image data storing section 77 for two-dimensionally mapping and temporarily storing the image data and the graphic data synthesized by the data synthesizing section 76, a data area selecting section 78 for selecting a predetermined data area from among the image data and the graphic data temporarily stored in the synthesized image data storing section 77, a window memory 79 for two-dimensionally mapping and temporarily storing the data in the data area of the image data and graphic data selected by the data area selecting section 78, a profile data producing section 80 for producing density profile data corresponding to the density of an image of the image data surrounded by a predetermined pattern produced in the window memory 79 and writing them in the window memory 79, a profile data correcting section 82 for correcting the profile data regarding density written in the window memory 79, a profile data storing section 84 for storing the corrected profile data, and a image displaying means 86 for displaying the image data and the graphic data stored in the window memory 79 and the profile data produced by the profile data storing section 84 on the CRT 50.

An image data selecting signal is input to the image data selecting section 68 from a selected image data determining section 100 and an enlarging/reducing signal is input to the image data enlarging/reducing section 70 from an image data magnification factor determining section 102. Further, a graphic data selecting signal is input to the graphic data storing section 74 from graphic data selecting means 104 and a data synthesizing signal is input to the data synthesizing section 76 from data synthesis instructing means 106 which determines what graphic data should be selected and how the image data and the graphic data are to be synthesized to be displayed on the CRT 50. Moreover, a data area specifying signal is input to the data area selecting section 78 from data area specifying means 107 and a profile data producing signal is input to the profile data producing section 80 from profile data production instructing means 110. Further, an image displaying signal is input to the image displaying section 84 from image display instructing means 112 and a profile data correcting signal is input to the profile data correcting section 82 from profile data correcting means 114. Furthermore, a profile data outputting signal is input to the profile data storing section 84 from profile data outputting means 116.

The selected image data determining section 100, the image data magnification factor determining section 102, the graphic data selecting means 104, the data synthesis instructing means 106, the data area specifying means 107, the profile data production instructing means 110, the image display instructing means 112 and the profile data correcting means 114 can be operated by a mouse (not shown).

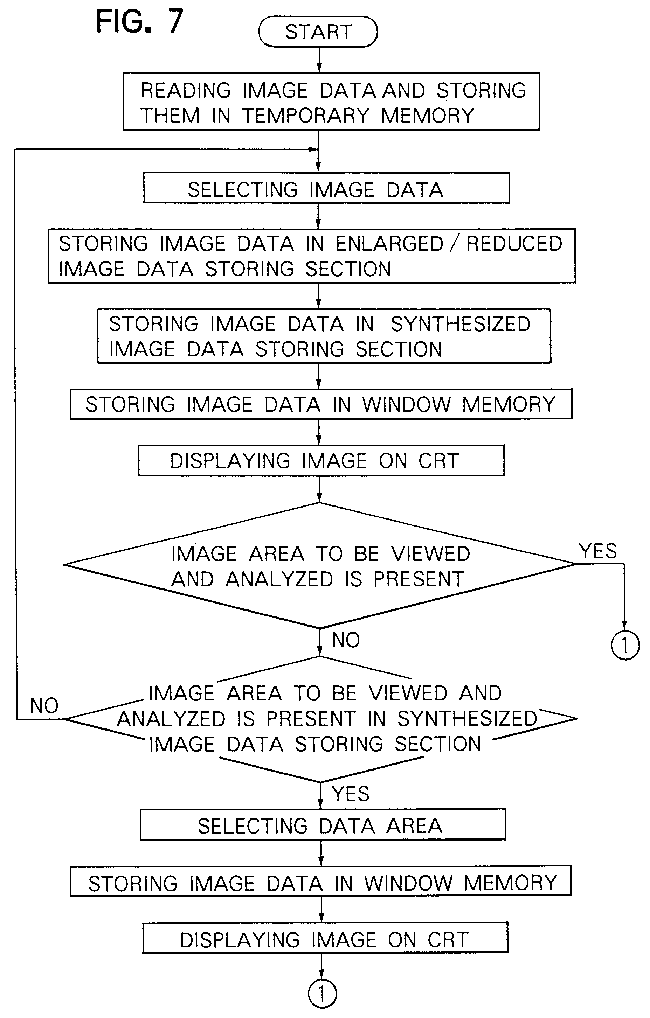

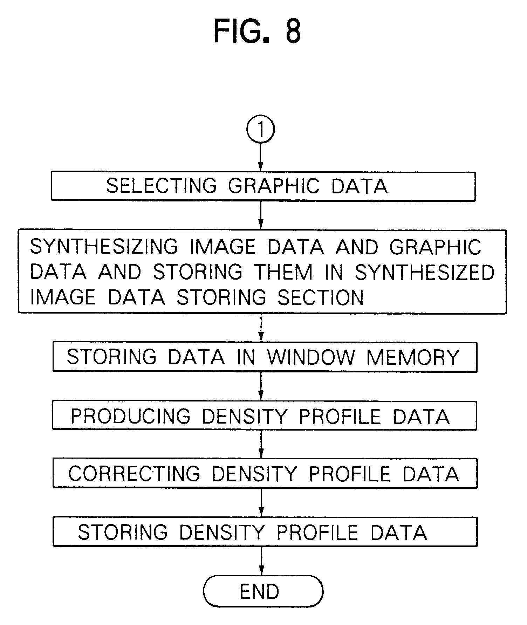

Figures 7 and 8 are flow charts showing an operation of the thus constituted autoradiographic image analyzing apparatus for producing and correcting a density profile of a predetermined image area in an autoradiographic image displayed on the CRT 50.

An operator first reads image data to be displayed on the CRT 50 from the image data storing section 42 in the image data storing means 40 and causes the temporary memory 66 to two-dimensionally map and temporarily store the image data. The selected image data determining means 100 is then operated using a mouse to input an image data selecting signal to the image data selecting section 68 so that image data containing an image area to be viewed and analyzed are selected from among image data two-dimensionally mapped and temporarily stored in the temporary memory 66 and the image data magnification factor determining means 102 is operated as occasion demands to input an enlarging/reducing signal to the image data enlarging/reducing section 70 so that the selected image data are enlarged or reduced and then two-dimensionally mapped and temporarily stored in the enlarged/reduced image data storing section 72. The operator then inputs a data synthesizing signal to the data synthesizing section 76 by operating the data synthesis instructing means 106 so that the image data two-dimensionally mapped and temporarily stored in the enlarged/reduced image data storing section 72 are two-dimensionally mapped and temporarily stored in the synthesized image data storing section 77. The operator further inputs a data area selecting signal to the data area selecting section 78 by operating the data area specifying means 107 so that an area of image data to be displayed on the CRT 50 is selected and then two-dimensionally mapped and temporarily stored in the window memory 79. Thus, the image data two-dimensionally mapped and temporarily stored in the window memory 79 are displayed on the CRT 50 as a visible image by the image displaying section 86.

The operator views the image on the CRT 50 and judges whether or not the image area to be viewed and analyzed is displayed in the desired manner.

If it is judged that the image area to be viewed and analyzed is not displayed in the desired manner, the operator inputs the data area selecting signal to the data area selecting section 78 by operating the data area specifying means 107, thereby changing the area of the image data to be displayed on the CRT 50 until a desired image area is displayed on the CRT 50. Since a part of the image data two-dimensionally mapped and temporarily stored in the temporary memory 66 are selected by the image data selecting section 68 and stored in the synthesized image data storing section 77, it is possible that the image area to be viewed and analyzed is not stored in the synthesized image data storing section 77. In such a case, the operator further inputs an image data selecting signal to the image data selecting section 68 and changes the selected image data until the desired image area is stored in the synthesized image data storing section 77. When the desired image area has been stored in the synthesized image data storing section 77, the operator inputs a data area selecting signal to the data area selecting section 78 so as to change the area of the image data to be displayed on the CRT 50 until the desired image area is displayed on the CRT 50.

If the image data corresponding to the image area to be viewed and analyzed are stored in the window memory and the desired image is displayed on the CRT 50 as a result of changing the image displayed on the CRT 50, or if the desired image is displayed on the CRT 50 from the beginning of the operation, the operator operates the graphic data selecting means 104 so as to input a graphic data selecting signal to the graphic data storing section 74, thereby selecting graphic data, rectangular graphic data in this embodiment, and operates the data synthesis instructing means 106 so as to input a data synthesizing signal to the data synthesizing section 76, thereby synthesizing the image data and the graphic data so that a pattern corresponding to the selected graphic data can be displayed at a predetermined position on the CRT 50 and the thus synthesized data are two-dimensionally mapped and temporarily stored in the synthesized image data storing section 77.

Further, the operator inputs a data area specifying signal to the data area selecting section 78 by operating the data area specifying means 107 so as to two-dimensionally map and temporarily store the image data of a predetermined area and the graphic data in the window memory 79 and outputs an image display signal to the image displaying section 86 so as to display the image data and the graphic data two-dimensionally mapped and temporarily stored in the window memory 79 on the CRT 50.

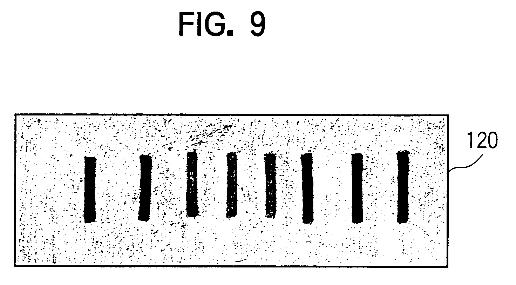

The image thus displayed on the CRT 50 contains an image area surrounded by a rectangular pattern 120. Figure 9 is a partially enlarged view showing the screen of the CRT 50 displaying the image area surrounded by the rectangular pattern 120.

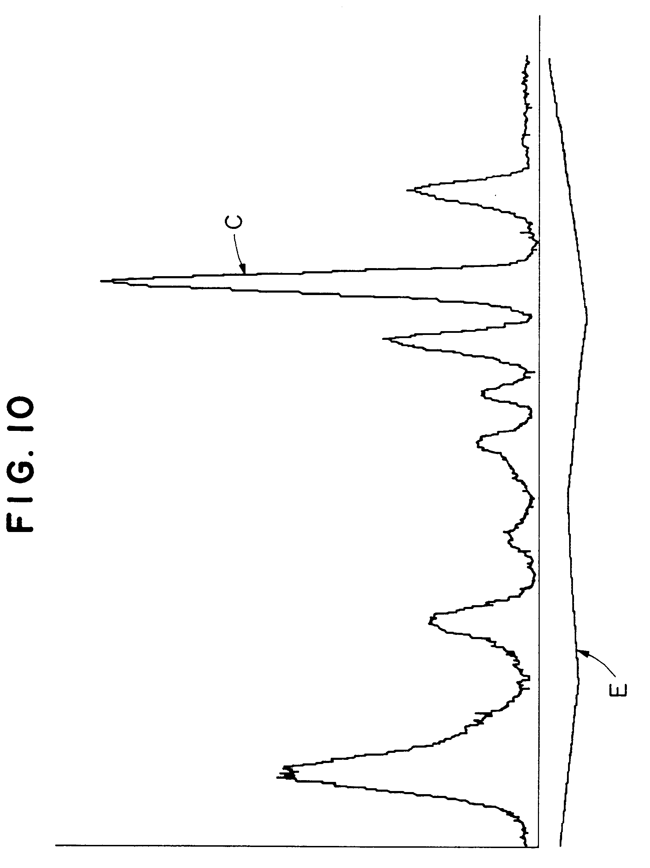

When a density profile of the image area surrounded by the rectangular pattern 120 is produced, the operator inputs a profile producing signal to the profile data producing section 80 by operating the profile data production instructing means 110 so as to cause the profile data producing section 80 to integrate gray levels of pixels in the image area surrounded by the rectangular pattern 120 and to produce density profile data. The produced density profile data are output to the window memory 79 and after they are temporarily stored therein, a density profile is displayed on the CRT 50 based thereon. As shown in Figure 1, the thus displayed density profile A is normally influenced by smear components. Accordingly, the density profile data have to be corrected in order to obtain a correct density profile. Therefore, when it is judged that the density profile A has to be corrected, the operator outputs a profile data correcting signal to the profile data correcting section 82 by operating the profile data correcting means 114 and produces correcting curve data corresponding to a correcting curve B formed by data corresponding to the density which can be considered to be the density of the smear components, whereby the correcting curve data is subtracted from the profile data of the density corresponding to the density profile A. In other words, the density profile data is corrected so that the correcting curve B becomes a new base line, thereby producing corrected density profile data. Figure 2 is a graph showing the correcting operation of the profile data effected in a data memory. When the profile data of the density have been corrected in this manner, the profile data storing section 84 stores the profile data of the density corresponding to uncorrected density profile A and the correcting curve data corresponding to the correcting curve B. Since corrected density profile C can be formed on the CRT 50 based on the uncorrected density profile data and the correcting curve data, the corrected density profile data are not stored in the profile data storing section 84. At the same time when the profile data storing section 84 stores the uncorrected density profile data and the correcting curve data, the profile data correcting section 82 temporarily stores the corrected density profile data in the window memory 79 and when the operator inputs a predetermined image display signal to the image displaying section 86 by operating the image display instructing means 112, the corrected density profile C is displayed on the CRT 50. The correcting curve B corresponding to the correcting curve data stored in the profile data storing section 84 is inverted with respect to the base line D corresponding to zero density and the thus obtained correction processed curve E is displayed on the CRT 50. Figure 10 shows the corrected density profile C and the correction processed curve E displayed on the CRT 50. Thus, since the uncorrected profile data and the correcting curve data are stored in the profile data storing section 84, the operator can, as occasion demands, display the corrected density profile C together with the correction processed curve E on the CRT 50 by operating the profile data outputting means 116 to output the uncorrected profile data and the correcting curve data stored in the profile data storing section 84 to the window memory 79 and to temporarily store them in the window memory 79 and inputting a predetermined image displaying signal to the image displaying section 86. Therefore, as shown in Figure 10, since the corrected density profile C is displayed on the CRT 50 and at the same time, the correction processed curve E is displayed on the CRT 50, the operator can judge whether or not the density profile data have been properly corrected and when it is judged that improper correction was effected, the operator outputs a profile data correcting signal to the profile data correcting section 82 by operating the profile data correcting means 114, again corrects the density profile data by correcting the correcting curve data, thereby producing corrected profile curve data and can reserve data relating to a properly corrected density profile by storing the corrected correcting curve data in the profile data storing section 84, while the operator is viewing the screen of the CRT 50.

According to the above described embodiment, since how the density profile of a predetermined image area was corrected is displayed on the CRT 50, after the profile data has been corrected, the operator who effected the correction or other operators can judge whether or not the density profile data was properly corrected. Further, when it is judged that improper correction was effected, since the correcting curve data are properly corrected so as to again correct the density profile data, thereby storing the corrected correcting curve data in the profile data storing section 84, it is possible to obtain a desired profile of image density which is not influenced by smear components.

The present invention has thus been shown and described with reference to specific embodiments. However, it should be noted that the present invention is in no way limited to the details of the described arrangements but changes and modifications may be made without departing from the scope of the appended claims.

For example, in the above described embodiment, although the density profile of the image of a protein produced by thin layer chromatography (TLC) is produced, the present invention is not limited to such autoradiography and can also be applied to produce density profiles of autoradiographic images such as an autoradiographic image of a gene produced by the Southern blotting method and the hybridization method, an autoradiographic image produced by polyacrylamide gel electrophoresis for the separation or identification of protein or the estimation of molecular weight or properties of protein or the like, an autoradiographic image for studying the metabolism, absorption, excretion path and state of a substance introduced into a test animal such as a mouse. Further, the present invention is applicable for producing density profiles of chemiluminescent images produced by a chemiluminescent process such as a chemiluminescent image of a gene produced by the Southern blot hybridization method, a chemiluminescent image of a protein produced by thin layer chromatography, a chemiluminescent image produced by polyacrylamide gel electrophoresis for the separation or identification of a protein or the estimation of molecular weight or properties of a protein or the like. Moreover, the present invention can be widely applied to produce density profiles of an electron beam transmission image or an electron beam diffraction image of a metal or nonmetal produced by an electron microscope, an electron beam image of tissue of an organism and a radiographic diffraction image of a metal or nonmetal.

Further, in the above described embodiment, although a rectangular pattern 120 is used as graphic data, other graphic data can be used depending upon the shape of the image area whose density profile is to be produced. Moreover, a linear pattern can be used to produce a density profile without integrating gray levels of pixels in a predetermined image area.

Furthermore, in the above described embodiment, only the uncorrected profile data and the correcting curve data are stored in the profile data storing section 84, the corrected density profile are displayed on the CRT 50 using two kinds of the data and when the density profile data is again corrected, only the correcting curve data are corrected and the corrected correcting data are stored in the profile data storing section 84. However, the corrected profile data may be stored in the profile data storing section 84.

Moreover, in the above described embodiment, although the image data are produced by using the stimulable phosphor sheet 1 and converting locational information regarding radioactive labeling substance to an electrical signal and are displayed on the CRT 50 as a visible image, it is possible to once form a visible image on a photographic film instead of the stimulable phosphor sheet 1, photoelectrically read the visible image, convert it to an electrical signal and process the thus obtained image data in a similar manner to the above.

Further, in the present invention, the respective means need not necessarily be physical means and arrangements whereby the functions of the respective means are accomplished by software fall within the scope of the present invention as defined by the appended claims. In addition, the function of a single means may be accomplished by two or more physical means and the functions of two or more means may be accomplished by a single physical means.

According to the present invention, it is possible to provide an image analyzing apparatus which can produce an image density profile free from smear components in a desired manner.

## Claims

1. An image analyzing apparatus (30) comprising image data storing means (66) for storing image data, image data memory means (79) for two-dimensionally mapping and temporarily storing at least a part of the image data stored in the image data storing means (66) and being adapted for forming an image based on the image data temporarily stored in the image data memory means (79) on displaying means (50) and producing a density profile of a predetermined image area, thereby quantitatively analyzing the image, the image analyzing apparatus (30) further comprising profile data producing means (80) for producing density profile data of a predetermined image area and storing them in the image data memory means (79), profile data correcting means (114) for subtracting correcting curve data formed by data corresponding to density of smear components from the density profile data produced by the profile data producing means (80) and stored in the image data memory means (72), thereby correcting the density profile data, characterized by profile data storing means (84) for storing the density profile data produced by the profile data producing means (80) and the correcting curve data; and profile displaying means (84, 79, 86, 50) adapted for displaying a density profile on the displaying means (50) based on the density profile data produced by the profile data producing means (80) and the density profile data corrected by the profile correcting means (82) and displaying a correction processed curve (E) formed by inverting a correcting curve obtained based on the correcting curve data with respect to a base line where density is zero on the displaying means (50).

2. An image analyzing apparatus (30) in accordance with Claim 1 which further comprises temporary memory means (66) for two-dimensionally mapping and temporarily storing the image data stored in the image data storing means, graphic data storing means (74) for storing graphic data to be displayed on the displaying means (50) and data synthesizing means (76) or selecting at least a part of the image data stored in the temporary memory means (66) and graphic data from among the graphic data stored in the graphic data storing means (74), synthesizing them, thereby producing synthesized data, and wherein the image data memory means (79) is adapted to two-dimensionally map and temporarily store at least a part of the synthesized data produced by the data synthesizing means (76).

3. An image analyzing apparatus (30) in accordance with Claim 1 which further comprises image data selecting means (68) for selecting a part of the image data stored in the temporary memory means (66), image data enlarging/reducing means (70) for enlarging or reducing the image data selected by the image data selecting means (68) and storing them, enlarged/reduced image data storing means (72) for storing the image data enlarged or reduced by the image data enlarging/reducing means (70), synthesized data storing means (77) for two-dimensionally mapping and temporarily storing the synthesized data produced by the data synthesizing mean (76) and data area selecting means (78) for selecting an area of the synthesized data stored in the synthesized data storing means (77) and storing them in the image data memory means (79), and wherein the data synthesizing means (76) is adapted to synthesize the image data stored in the enlarged/reduced image data storing means (72) and the graphic data stored in the graphic data storing means (74), thereby producing the synthesized data.

4. An image analyzing apparatus (30) in accordance with Claim 1 or 2 wherein the data synthesizing means (76) is adapted to select graphic data from among the graphic data stored in the graphic data storing means (74) and determine a position of the graphic data in the synthesized data storing means 77.

5. An image analyzing apparatus (30) in accordance with any one of Claims 1 to 4 wherein the image data is produced using a stimulable phosphor sheet (1).

6. An image analyzing apparatus (30) in accordance with any one of Claims 1 to 5 wherein the image data are constituted by image data selected from a group consisting of autoradiographic image data, radiographic diffraction image data, electron microscopic image data and chemiluminescent image data.

7. An image analyzing apparatus (30) in accordance with Claim 6 wherein the autoradiographic image data, the radiographic diffraction image data and electron microscopic image data are produced by absorbing and storing the energy of a radiation or an electron beam emitted from a specimen in a stimulable phosphor, irradiating the stimulable phosphor with an electromagnetic wave (2) and photoelectrically converting light emitted from the stimulable phosphor.

8. An image analyzing apparatus (30) in accordance with Claim 6 wherein the chemiluminescent image data are produced by absorbing and storing the energy of a visible light emitted from a specimen in a stimulable phosphor, irradiating the stimulable phosphor with an electromagnetic wave (2) and photoelectrically converting light emitted from the stimulable phosphor.

## Patentansprüche

1. Bildanalysevorrichtung (30), umfassend Bilddatenspeichermittel (66) zum Speichern von Bilddaten, eine Bilddatenspeichereinrichtung (79) zur zweidimensionalen Abbildung und Zwischenspeicherung von zumindest einem Teil der in den Bilddatenspeichermitteln (66) gespeicherten Bilddaten, außerdem ausgebildet zur Erzeugung eines Bildes basierend auf den in der Bilddatenspeichereinrichtung (79) zwischengespeicherten Bilddaten auf einer Anzeigevorrichtung (50) und zum Erzeugen eines Dichteprofils eines vorbestimmten Bildbereichs, um dadurch das Bild quantitativ zu analysieren, wobei die Bildanalysevorrichtung (30) außerdem aufweist: eine Profildatenerzeugungseinrichtung (80) zum Erzeugen von Dichteprofildaten eines vorbestimmten Bildbereichs und zum Speichern dieser Dichteprofildaten in der Bilddatenspeichereinrichtung (79), eine Profildatenkorrektureinrichtung (114) zum Subtrahieren von Korrekturkurvendaten, die durch der Dichte von Schmierkomponenten entsprechende Daten gebildet werden, von den Dichteprofildaten, die von der Profildatenerzeugungseinrichtung (80) erzeugt und in der Bilddatenspeichereinrichtung (79) gespeichert werden, um dadurch die Dichteprofildaten zu korrigieren, **gekennzeichnet durch** eine Profildatenspeichereinrichtung (84) zum Speichern der Dichteprofildaten, die von der Profildatenerzeugungseinrichtung (80) erzeugt werden, und der Korrekturkurvendaten; und eine Profilanzeigevorrichtung (84, 79, 86, 50), ausgebildet zur Dartellung eines Dichteprofils auf der Anzeigevorrichtung (50) basierend auf den Dichteprofildaten, die von der Profildatenerzeugungseinrichtung (80) erzeugt wurden, und den Dichteprofildaten, die von der Profilkorrektureinrichtung (82) korrigiert wurden, und zum Anzeigen einer korrekturverarbeiteten Kurve (E) auf der Anzeigevorrichtung (50), wobei die korrekturverarbeitete Kurve gebildet wird durch Invertieren einer basierend auf den Korrekturkurvendaten erhaltenen Korrekturkurve bezüglich einer Basislinie, an der die Dichte Null ist.

2. Bildanalysevorrichtung (30) nach Anspruch 1, die außerdem eine Zwischenspeichereinrichtung (66) für die zweidimensionale Abbildung und Zwischenspeicherung der in den Bilddatenspeichermitteln gespeicherten Bilddaten aufweist, ferner eine Graphikdatenspeichereinrichtung (74) zum Speichern graphischer Daten für die Anzeige auf der Anzeigevorrichtung (50) und eine Datensynthetisiereinrichtung (76) zum Auswählen zumindest eines Teils der in der Zwischenspeichereinrichtung (66) gespeicherten Bilddaten sowie Graphikdaten aus den in der Graphikdatenspeichereinrichtung (74) gespeicherten Graphikdaten, um diese zu synthetisieren und dadurch zusammengesetzte Daten zu erzeugen, wobei die Bilddatenspeichereinrichtung (79) dazu ausgebildet ist, zumindest einen Teil der von der Datensynthetisiereinrichtung (76) erzeugten zusammengesetzten Daten zweidimensional abzubilden und zwischenzuspeichern.

3. Bildanalysevorrichtung (30) nach Anspruch 1, die außerdem eine Bilddatenauswahleinrichtung (68) zum Auswählen eines Teils der in der Zwischenspeichereinrichtung (66) gespeicherten Bilddaten aufweist, ferner eine Bilddatenvergrößerungs/-verkleinerungseinrichtung (70) zum Vergrößern oder Verkleinern der von der Bilddatenauswahleinrichtung (68) ausgewählten Bilddaten, um jene Daten zu speichern, eine Speichereinrichtung (72) für vergrößerte/verkleinerte Bilddaten zum Speichern der von der Bildatenvergrößerungs/-verkleinerungseinrichtung (70) vergrößerten oder verkleinerten Bilddaten, eine Speichereinrichtung (77) für zusammengesetzte Daten, um die von der Datensynthetisiereinrichtung (76) erzeugten zusammengesetzten Daten zweidimensional abzubilden und zwischenzuspeichern, und eine Datenbereichauswahleinrichtung (78) zum Auswählen eines Bereichs zusammengesetzter Daten, die in der Speichereinrichtung (77) für zusammengesetzte Daten gespeichert sind, um sie in der Bilddatenspeichereinrichtung (79) abzuspeichern, wobei die Datensynthetisiereinrichtung (76) dazu ausgebildet ist, die in der Datenspeichereinrichtung (72) für vergrößerte/verkleinerte Bilddaten gespeicherten Bilddaten und die in der Graphikdaten-Speichereinrichtung (74) gespeicherten Graphikdaten zu synthetisieren, um dadurch die zusammengesetzten Daten zu erzeugen.

4. Bildanalysevorrichtung (30) nach Anspruch 1 oder 2, bei der die Datensynthetisiereinrichtung (76) dazu ausgebildet ist, aus den in der Graphikdatenspeichereinrichtung (74) gespeicherten Graphikdaten Graphikdaten auszuwählen und eine Position der Graphikdaten in der Speichereinrichtung (77) für synthetisierte Daten zu bestimmen.

5. Bildanalysevorrichtung (30) nach einem der Ansprüche 1 bis 4, bei der die Bilddaten mit Hilfe eines anregbaren Leuchtstoffblatts (1) erzeugt werden.

6. Bildanalysevorrichtung (30) nach einem der Ansprüche 1 bis 5, bei der die Bildaten durch solche Bilddaten gebildet werden, die aus einer Gruppe ausgewählt sind, welche besteht aus autoradiographischen Bilddaten, radiographischen Beugungsbilddaten, Elektronenmikroskop-Bilddaten und Chemolumineszenz-Bilddaten.

7. Bildanalysevorrichtung (30) nach Anspruch 6, bei der die autoradiographischen Bilddaten, die radiographischen Beugungsbilddaten und die Elektronenmikroskop-Bilddaten dadurch erzeugt werden, daß die Energie einer Strahlung oder eines Elektronenstrahlbündels absorbiert und gespeichert wird, die von einer Probe in einem anregbaren Leuchtstoff emittiert wird, indem der anregbare Leuchtstoff mit einer elektromagnetischen Welle (2) bestrahlt wird und von dem anregbaren Leuchtstoff emittiertes Licht photoelektrisch umgewandelt wird.

8. Bildanalysevorrichtung (30) nach Anspruch 6, bei der die Chemolumineszenz-Bilddaten dadurch erzeugt werden, daß die Energie von sichtbarem Licht, das von einer Probe emittiert wird, absorbiert und in einem anregbaren Leuchtstoff gespeichert wird, der anregbare Leuchtstoff mit einer elektromagnetischen Welle (2) bestrahlt wird, und das von dem anregbaren Leuchtstoff emittierte Licht photoelektrisch umgesetzt wird.

## Revendications

1. Appareil d'analyse d'image (30) comprenant un moyen de stockage de données d'image (66) pour stocker des données d'image, un moyen de mémoire de données d'image (79) pour cartographier bidimensionnellement et stocker temporairement au moins une partie des données d'image stockées dans le moyen de stockage de données d'image (66) et qui est adapté pour former une image sur la base des données d'image stockées temporairement dans le moyen de mémoire de données d'image (79) sur un moyen d'affichage (50) et pour produire un profil de densité d'une zone d'image prédéterminée, d'où ainsi l'analyse quantitative de l'image, l'appareil d'analyse d'image (30) comprenant en outre un moyen de production de données de profil (80) pour produire des données de profil de densité d'une zone d'image prédéterminée et pour les stocker dans le moyen de mémoire de données d'image (79), un moyen de correction de données de profil (114) pour soustraire des données de courbe de correction, formées au moyen de données correspondant à une densité de composants de trace, des données de profil de densité produites par le moyen de production de données de profil (80) et stockées dans le moyen de mémoire de données d'image (79), d'où ainsi la correction des données de profil de densité, caractérisé par un moyen de stockage de données de profil (84) pour stocker les données de profil de densité produites par le moyen de production de données de profil (80) et au moyen des données de courbe de correction; et un moyen d'affichage de profil (84, 79, 86, 50) adapté pour afficher un profit de densité sur le moyen d'affichage (50) sur la base des données de profit de densité produites par le moyen de production de données de profit (80) et sur la base des données de profit de densité corrigées par le moyen de correction de profit (82) et pour afficher une courbe traitée en correction (E) formée en inversant une courbe de correction obtenue sur la base des données de courbe de correction par rapport à une ligne de base au niveau de laquelle la densité est à 0 sur le moyen d'affichage (50).

2. Appareil d'analyse d'image (30) selon la revendication 1, lequel appareil comprend en outre un moyen de mémoire temporaire (66) pour cartographier bidimensionnellement et stocker temporairement les données d'image stockées dans le moyen de stockage de données d'image, un moyen de stockage de données graphiques (74) pour stocker des données graphiques destinées à être affichées sur le moyen d'affichage (50) et un moyen de synthèse de données (76) pour sélectionner au moins une partie des données d'image stockées dans le moyen de mémoire temporaire (66) et des données graphiques prises parmi les données graphiques stockées dans le moyen de stockage de données graphiques (74), pour les synthétiser et pour ainsi produire des données synthétisées et dans lequel le moyen de mémoire de données d'image (79) est adapté pour cartographier bidimensionnellement et stocker temporairement au moins une partie des données synthétisées produites par le moyen de synthèse de données (76).

3. Appareil d'analyse d'image (30) selon la revendication 1, lequel appareil comprend en outre un moyen de sélection de données d'image (68) pour sélectionner une partie des données d'image stockées dans le moyen de mémoire temporaire (66), un moyen d'agrandissement/réduction de données d'image (70) pour agrandir ou réduire les données d'image sélectionnées par le moyen de sélection de données d'image (68) et pour les stocker, un moyen de stockage de données d'image agrandies/réduites (72) pour stocker les données d'image agrandies ou réduites par le moyen d'agrandissement/réduction de données d'image (70), un moyen de stockage de données synthétisées (77) pour cartographier bidimensionnellement et stocker temporairement les données synthétisées produites par le moyen de synthèse de données (76) et un moyen de sélection de zone de données (78) pour sélectionner une zone des données synthétisées stockées dans le moyen de stockage de données synthétisées et pour stocker les données correspondantes dans le moyen de mémoire de données d'image (79) et dans lequel le moyen de synthèse de données (76) est adapté pour synthétiser les données d'image stockées dans le moyen de stockage de données d'image agrandies/réduites (72) et les données graphiques stockées dans le moyen de stockage de données graphiques (74) pour ainsi produire les données synthétisées.

4. Appareil d'analyse d'image (30) selon la revendication 1 ou 2, dans lequel le moyen de synthèse de données (76) est adapté pour sélectionner des données graphiques prises parmi les données graphiques stockées dans le moyen de stockage de données graphiques (74) et pour déterminer une position des données graphiques dans le moyen de stockage de données synthétisées (77).

5. Appareil d'analyse d'image (30) selon l'une quelconque des revendications 1 à 4, dans lequel les données d'image sont produites en utilisant une feuille de phosphore stimulable (1).

6. Appareil d'analyse d'image (30) selon l'une quelconque des revendications 1 à 5, dans lequel les données d'image sont constituées par des données d'image sélectionnées parmi un groupe comprenant des données d'image autoradiographique, des données d'image de diffraction radiographique, des données d'image de microscope électronique et des données d'image chimico-luminescentes.

7. Appareil d'analyse d'image (30) selon la revendication 6, dans lequel les données d'image autoradiographique, les données d'image de diffraction radiographique et les données d'image de microscope électronique sont produites en absorbant et en stockant l'énergie d'un rayonnement ou d'un faisceau d'électrons émis depuis un échantillon dans un phosphore stimulable, en irradiant le phosphore stimulable à l'aide d'une onde électromagnétique (2) et en convertissant photoélectriquement la lumière émise depuis le phosphore stimulable.

8. Appareil d'analyse d'image (30) selon la revendication 6, dans lequel les données d'image chimico-luminescentes sont produites en absorbant et en stockant l'énergie d'une lumière visible émise depuis un échantillon dans un phosphore stimulable, en irradiant le phosphore stimulable à l'aide d'une onde électromagnétique (2) et en convertissant photoélectriquement la lumière émise depuis le phosphore stimulable.
